# EUROPEAN PATENT APPLICATION

(11) **EP 3 002 357 A1**
(43) Date of publication of application: **06.04.2016**
(21) Application number: 15191603.8
(22) Date of filing: 14.04.2009
(51) Int. Cl.: D06F 39/02, B29C 45/14

(54) **HOUSEHOLD APPLIANCE DETERGENT DISPENSER CONTAINER, AND METHOD OF PRODUCING THE CONTAINER**

(62) Divisional of application: 09005290.3
(71) Applicant: Electrolux Home Products Corporation N.V., 1130 Brussels (BE)
(72) Inventor: Krupicka, Andreas, 33080 Porcia (PN) (IT)
(74) Representative: Donatello, Daniele

(57) **Abstract**

A method of producing household appliance detergent dispenser container (4) comprising outer surfaces (13) designed to slide inside a seat (12) formed in a casing (2) of an household appliance (1). The outer sliding surfaces (13) comprise a polytetrafluoroethylene (PTFE) film (11) and a adhesion promoting layer (10) fixed firmly to the polytetrafluoroethylene (PTFE) film (11).

## Description

The present invention relates to a household appliance detergent dispenser container, and to a method of producing the container.

More specifically, the present invention relates to a detergent dispenser container, drawer-type or not, used in an household appliance such as a dishwasher or washing machine, to which the following description refers purely by way of example.

As is known, washing machines or dishwashers have a detergent dispenser container with one or more outwardly-open pockets inside, each defining a detergent compartment able to contain washing powder or additive, to be dispensed at various stages in the wash program.

As is also known, the detergent compartments of the dispenser container are made of plastic, typically polypropylene, which, having a low non-stick coefficient, is subject to detergent build-up on the outer surface of the compartment.

Detergent sticking to the outer surface of the dispenser container compartment is a serious problem, in that, on the one hand, it prevents thorough flushing of the container at the end of the wash cycle, and, on the other, promotes the growth of bacteria inside the container, to the obvious detriment of the user.

Accordingly, considerable research has been carried out over the past few years to determine suitable materials from which to produce detergent dispenser containers, and which reduce detergent adhesion to the inner surfaces of the compartments to eliminate the above drawbacks. A good deal of work, however, still remains to be done.

It is an object of the present invention to provide an electric household appliance detergent dispenser container with detergent compartments able to reduce detergent adhesion inside.

It is also an object of the present invention to provide a low-cost method of producing an household appliance detergent dispenser container with detergent compartments able to reduce detergent adhesion inside.

According to the present invention, there is provided an household appliance detergent dispenser container as claimed in Claim 1 and preferably, though not necessarily, in any one of the Claims depending directly or indirectly on Claim 1.

According to the present invention, there is also provided an electric household appliance as claimed in Claim 6 and preferably, though not necessarily, in any one of the Claims depending directly or indirectly on Claim 6.

According to the present invention, there is also provided a method of producing an household appliance detergent dispenser container, as claimed in Claim 7 and preferably, though not necessarily, in any one of the Claims depending directly or indirectly on Claim 7.

A non-limiting embodiment of the present invention will be described by way of example with reference to the accompanying drawings, in which:
Figure 1 shows a schematic front view of an electric household appliance featuring a detergent dispenser container in accordance with the teachings of the present invention;
Figure 2 shows a partly sectioned, schematic view of the Figure 1 container;
Figure 3 shows a variation of the container according to the present invention;
Figures 4 to 10 show, schematically, respective steps in the method of producing a container in accordance with the teachings of the present invention; while
Figures 11 to 13 show, schematically, respective steps of a different embodiment in the method of producing a container in accordance with the teachings of the present invention.

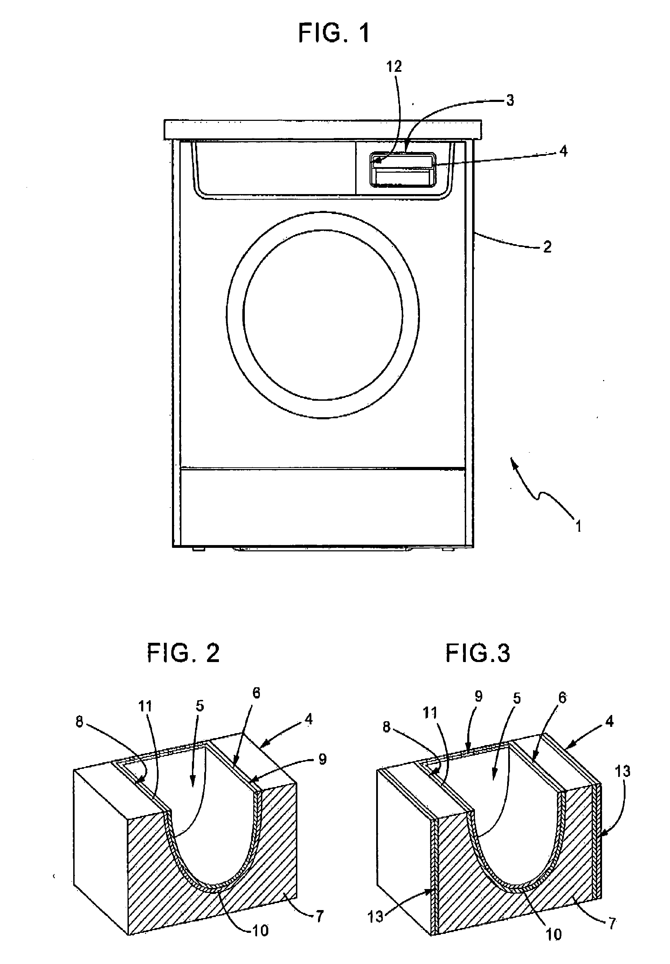

Number 1 in Figure 1 indicates as a whole an household appliance, such as a dishwasher or washing machine, substantially comprising a casing 2; a wash assembly (not shown) housed inside casing 2; and a detergent dispenser 3 for housing and dispensing detergents, such as washing powder and/or softener or similar wash products, and which is designed to contain and feed the detergents, on command, to the wash assembly (not shown).

Being known and not the object of the present invention, the wash assembly is not described in detail.

Dispenser 3 substantially comprises a dispenser container 4 having one or more detergent compartments 5, each of which is able to contain one or more detergents and is designed with an outer surface layer 6 of non-stick material.

More specifically, in the Figure 2 example, container 4 comprises a substantially parallelepiped-shaped support 7 made of plastic material, and in which an open-topped pocket 8 for the detergent is formed.

In the example shown, support 7 is made of polymeric material, such as a thermoplastic polymer. In detail the thermoplastic polymer could be, for example, PP (polypropylene), or ABS (Acrylonitrile butadiene styrene) or PC (polycarbonate) or any similar thermoplastic polymer.

In the Figure 2 the outer surface layer 6 of the container 4 comprises a sheet 9 in turn comprising an outer surface of non-stick material in the form of polytetrafluoroethylene (PTFE).

More specifically, sheet 9 substantially comprises adhesion promoting layer 10 having a first face fixed firmly to support 7; and a polytetrafluoroethylene (PTFE) film 11 having a first face fixed firmly to the second face of the adhesion promoting layer 10, and a second face defining the non-stick outer surface of compartment 5 eventually contacting the detergent.

With regard to the adhesion promoting layer 10, it may comprise, for example, a bonding agent disclosed in the International Patent No. WO2005/102652, filed on April 21, 2005 in the name of Chemplast Marc Etter LIMITED.

In one possible embodiment shown partly in Figure 3, container 4 is a drawer-type container designed to fit inside a seat 12 formed in casing 2, so as to slide, inside seat 12, between a rest position, in which container 4 is inserted completely inside seat 12, and a loading position, in which container 4 projects outwards from casing 2 and seat 12 to load the detergent inside compartment 5.

More specifically, container 4 has outer surfaces 13 which slide inside seat 12, and which advantageously comprise outer surface layer 6 of polytetrafluoroethylene (PTFE).

Outer surface layer 6 of polytetrafluoroethylene on surfaces 13 of container 4 has the advantage of reducing friction of container 4 as it slides inside seat 12.

In detail, each outer surface 13 of the container 4 comprises a sheet 9 comprising the adhesion promoting layer 10 having a first face fixed firmly to outer surface of the support 7; and the polytetrafluoroethylene (PTFE) film 11 having a first face fixed firmly to the second face of the adhesion promoting layer 10, and a second face defining the sliding surface of the container 4.

In an embodiment not shown, container 4 may have no of polytetrafluoroethylene surface layer 6 in compartment 5, and may only comprise the polytetrafluoroethylene layer 6 on outer slide surfaces 13.

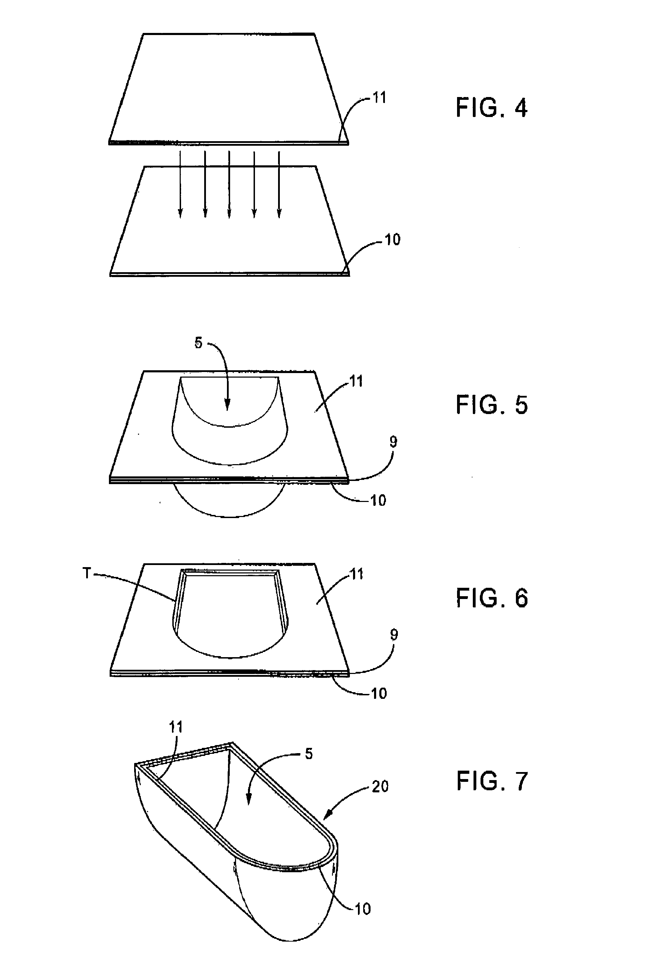

The method of producing container 4 will now be described with reference to Figures 4-10.

The method is substantially based on the principle of making detergent compartment 5 of the container 4 with the outer surface layer 6 of polytetrafluoroethylene material to reduce detergent adhesion to the outer surface of compartment 5.

The method substantially comprises a first step of forming a preform 20 of compartment 5 comprising outer surface layer 6 of polytetrafluoroethylene; a second step of placing preform 20 inside the cavity 21 of an injection mold 22; and a third step of injecting molten thermoplastic polymer into cavity 21 to fix preform 20 firmly to the molten polymer material and so form one body defining container 4.

More specifically, the first step comprises; preparing the polytetrafluoroethylene (PTFE) film 11 and fixing the adhesion promoting layer 10 to the polytetrafluoroethylene (PTFE) film 11 to form sheet 9 (as shown schematically in Figure 4).

The first step also comprises pre-forming sheet 9 to form a seat defining detergent compartment 5 of container 4 (as shown schematically in Figure 5)

At this point, the first step may comprise the step of cutting the preformed sheet 9 along a cutting line T defining the top outer peripheral edge of compartment 5 (Figure 6), to obtain the preform 20 of compartment 5 of container 4 (as shown schematically in Figure 7).

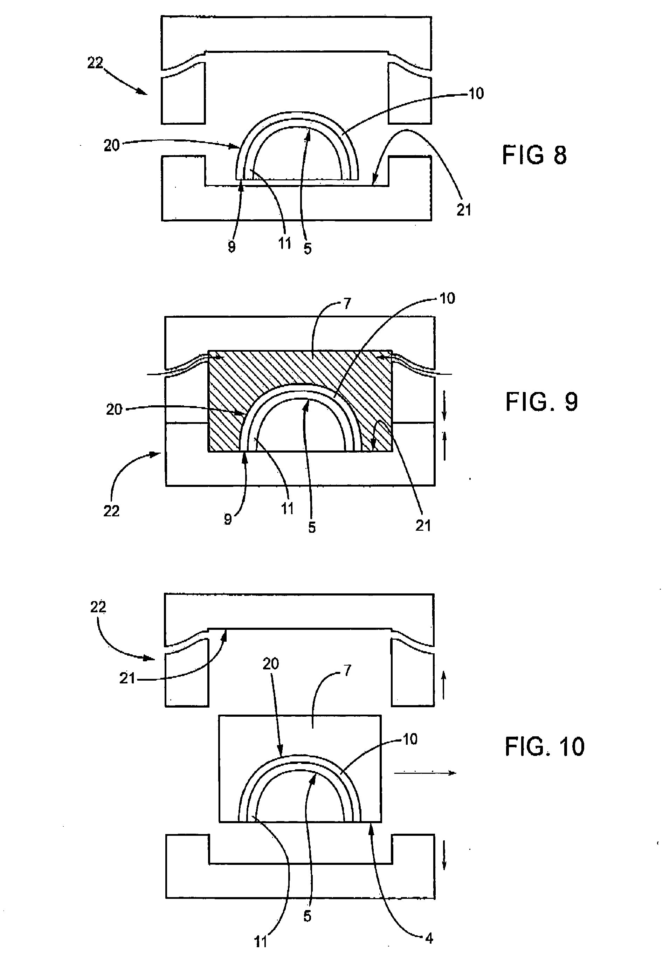

The preform 20 is then placed inside cavity 21 of injection mold 22, so that the outer surface of compartment 5 faces the inner face of cavity 21 (as shown schematically in Figure 8).

At this point, injection mold 22 is closed, and molten polymer is injected into cavity 21 to form a portion support 7 inside cavity 21 (as shown schematically in Figure 9). More specifically, as it is injected, the molten polymer gradually contacts the first face of adhesion promoting layer 10 of preform 20, and an interfacial bond is generated, thus fixing preform 20 to support 7.

After a predetermined time to allow the polymer to solidify, the injection mold is opened to extract container 4 (as shown schematically in Figure 10).

In a different embodiment, the method may comprise the step of pre-forming sheet 9 to obtain outer slide surfaces 13 of drawer-type container 4. More specifically, the method may comprise, for example, preparing a number of separate sheets 9 of non-stick material for corresponding outer slide surfaces 13 of container 4; performing each sheet 9 to the shape of the relative outer slide surface 13 of container 4; placing each preform 20 inside cavity 21 of injection mold 22, in a position corresponding to the outer slide surface 13 of container 4; and, finally, injecting the molten polymer into cavity 21 to form and at the same time join support 7 to preforms 20.

Making the outer surface of the container compartment out of polytetrafluoroethylene (PTFE) has the major advantage of greatly reducing detergent adhesion to the outer surface of the compartment, thus enabling more thorough flushing of the container at the end of the wash cycle, and also reducing the formation of bacteria inside the container.

Moreover, the method described above of producing the container is extremely easy, and therefore cheap, to implement.

It should be pointed out that the adhesion promoting layer between the polytetrafluoroethylene (PTFE) film and the polypropylene support is advantageous to the method described, on account of the chemical incompatibility of polytetrafluoroethylene and polypropylene and the impossibility, demonstrated by laboratory tests, of firmly joining polytetrafluoroethylene (PTFE) directly to a polypropylene surface.

Clearly, changes may be made to the container and method as described herein without, however, departing from the scope of the present invention as defined in the accompanying Claims.

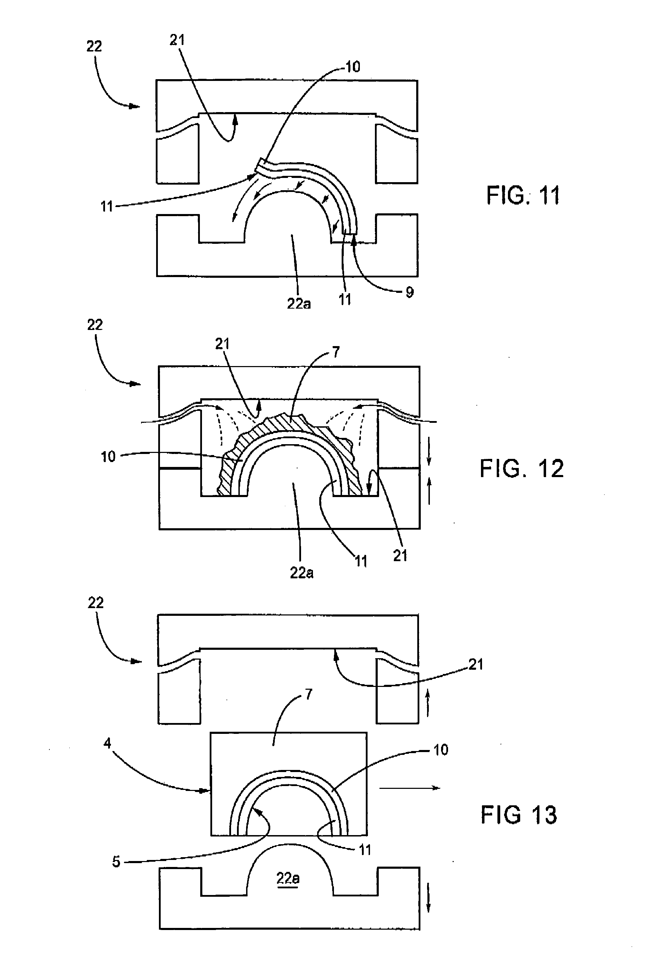

According to an additional embodiment shown in figures 11, 12 and 13, the injection mold 22 comprises a inner portion 22a which is shaped so that negatively reproduce the inner seat which define the detergent compartment 5 of the container 4.

In detail, with reference to the embodiment shown in figures 11, 12 and 13, the step of pre-forming sheet 9 to form a seat defining compartment 5 of container 4 is substituted by the step of placing one or more sheets 9 inside the cavity 21 of injection mold 22 upon the inner portion 22a and preferably, though not necessarily fixing the sheets 9 with the surface of the inner portion 22a of the injection mold 22 (Figures 11 and 12). It should be pointed out that the sheet 9 being supported from the inner portion 22a take the negative form of the inner portion 22a itself.

At this point, injection mold 22 is closed, and molten polymer is injected into cavity 21 to form support 7 inside cavity 21 (as shown schematically in Figure 12). More specifically, as it is injected, the molten polymer gradually contacts the first face of adhesion promoting layer 10 of the sheets 9, and an interfacial bond is generated, thus fixing sheets 9 to support 7.

## Claims

1. A household appliance detergent dispenser container (4) comprising outer sliding surfaces (13) and designed to fit inside a seat (12) formed in a casing (2) of an household appliance (1) so as to slide, inside said seat (12), between a rest position, in which container (4) is inserted inside seat (12), and a loading position, in which container (4) projects outwards from casing (2) and seat (12);
said container (4) being **characterized in that** said outer sliding surfaces (13) of said container (4) comprise an outer surface layer (6) of polytetrafluoroethylene (PTFE).

2. A detergent dispenser container according to claim 1, wherein said outer sliding surfaces (13) comprise a polytetrafluoroethylene (PTFE) film (11) and a adhesion promoting layer (10) fixed firmly to the polytetrafluoroethylene (PTFE) film (11).

3. A detergent dispenser container according to claim 2, comprising a support (7) made of plastic material; said adhesion promoting layer (10) having a first face fixed firmly to outer surface of said support (7); said polytetrafluoroethylene (PTFE) film (11) having a first face fixed firmly to the second face of the adhesion promoting layer (10) and a second face defining said sliding surfaces (13) of the said container (4).

4. A detergent dispenser container according to claim 1 comprising at least one detergent compartment (5) comprising, in turn, a detergent surface layer (6) of polytetrafluoroethylene (PTFE).

5. A detergent dispenser container as claimed in claim 4, wherein said detergent surface layer (6) comprises at least a polytetrafluoroethylene (PTFE) film (11) and a adhesion promoting layer (10) which is fixed firmly to said polytetrafluoroethylene (PTFE) film (11).

6. A detergent dispenser container as claimed in claims 3 and 4, wherein said detergent surface layer (6) of said compartment (5) is fixed firmly to said support portion (7).

7. A detergent dispenser container as claimed in claims 5 and 6, wherein said support portion (7) is fixed firmly to the adhesion promoting layer (10) of said detergent surface layer (6).

8. An electric household appliance (1) comprising a casing (2), a seat (12) formed in said casing (2), a wash assembly housed inside said casing (2) and a detergent dispenser (3) for housing detergent and designed to feed detergent, on command, to said wash assembly, said detergent dispenser (3) being provided with a detergent dispenser container (4) which comprises outer sliding surfaces (13) and is designed to fit inside said seat (12) so as to slide, inside said seat (12), between a rest position, in which container (4) is inserted inside seat (12), and a loading position, in which container (4) projects outwards from casing (2) and seat (12);
said detergent dispenser container (4) being made as claimed in any one of the foregoing claims.

9. A method of producing a household appliance detergent dispenser container comprising outer sliding surfaces (13) and designed to fit inside a seat (12) formed in a casing (2) of an household appliance (1) so as to slide, inside said seat (12), between a rest position, in which said container (4) is inserted inside said seat (12), and a loading position, in which said container (4) projects outwards from said casing (2) and said seat (12);
said method being **characterized by** comprising the steps of:
a) preparing a number of separate sheets (9) of non-stick material for corresponding outer slide surfaces (13) of said container (4);
b) pre-forming said sheets (9) to the shape of the relative outer sliding surfaces (13) of container (4) so as to obtain pre-forms (20);
c) placing said pre-forms (20) inside cavity (21) of an injection mold (22), in a position corresponding to the outer slide surfaces (13) of said container (4); and
d) injecting a molten polymer into cavity (21) to form and at the same time join support (7) to said pre-forms (20).

10. Method according to claim 9, wherein said sheets (9) comprise and adhesion promoting layer (10) and a polytetrafluoroethylene (PTFE) film (11) fixed firmly to said adhesion promoting layer (10);
said method comprising the step of injecting molten thermoplastic polymer into said cavity (21) to fill the space inside said cavity (21) so that to contact with said adhesion promoting layer (10) of said sheets (9).

11. Method according to claim 9, wherein said dispenser container (4) comprises at least one detergent compartment (5);
said method further comprising the steps of:
- fixing (11) an adhesion promoting layer (10) to a polytetrafluoroethylene (PTFE) film to form a sheet (9) reproducing the shape of said compartment (5);
- placing said sheet (9) inside the cavity (21) of an injection mold (22); said sheet (9);
- injecting molten plastic material into said cavity (21) of said injection mold (22) so that to gradually contact the surface of said adhesion promoting layer (10) of the sheet (9); said injected molten plastic material into said cavity (21) reproducing a portion support (7) of said container (4).

12. Method as claimed in claim 11, wherein before said step of placing said sheet (9), reproducing the shape of said compartment (5), inside the cavity (21), the method comprises performing said sheet (9) to obtain a preform (20) reproducing the shape of said compartment (5) and having the polytetrafluoroethylene (PTFE) film (11) on its outer detergent surface.

13. Method as claimed in claim 12, comprising the step of cutting said preform (20) along a cutting line (T) defining the outer peripheral edge of said compartment (5).

14. Method as claimed in claim 13, wherein said injection mold (22) comprises a inner portion (22a), which is shaped so that to negatively reproduce the inner seat which define compartment (5) of the container (4); said step of placing said sheet (9), reproducing the shape of said compartment (5), inside the cavity (21) comprising the step of fixing at lest a said sheet (9) with the surface of the inner portion (22a) of the injection mold (22) to reproduce the shape of said compartment (5).
